# EUROPEAN PATENT APPLICATION

(11) **EP 1 953 996 A2**
(43) Date of publication of application: **06.08.2008**
(21) Application number: 08001728.8
(22) Date of filing: 30.01.2008
(51) Int. Cl.: H04L 29/06

(54) **Method and apparatus for handling packets in a wireless communications system**

(30) Priority: 30.01.2007 US 887336 P
(71) Applicant: Innovative Sonic Limited, Tortola (VG)
(72) Inventor: Jiang, Sam Shiaw-Shiang, Tapei City (TW)
(74) Representative: Hager, Thomas Johannes

(57) **Abstract**

A method for handling packets in a wireless communications system includes receiving a non-access stratum, called NAS hereinafter, message and a radio resource control, called RRC hereinafter, message (302), combining the NAS message, the RRC message, a header, and an indication field indicating position information of the NAS message and the RRC message to get a first concatenated message (304), performing a ciphering procedure on the first concatenated message except the header to get a second concatenated message (306), and outputting the second concatenated message (308).

## Description

This application claims the benefit of U.S. Provisional Application No. 60/887,336, filed on Jan 30, 2007 and entitled "Concatenated message format and ciphering scheme", the contents of which are incorporated herein by reference.

The present invention relates to a method and apparatus for handling packets in a wireless communications system according to the pre-characterizing clauses of claims 1, 6, 11 and 19.

The third generation (3G) mobile telecommunications system provides high frequency spectrum utilization, universal coverage, and high quality, high-speed multimedia data transmission, and also meets all kinds of QoS requirements simultaneously, providing diverse, flexible, two-way transmission services and better communication quality to reduce transmission interruption rates.

Long Term Evolution wireless communications system (LTE system), an advanced high-speed wireless communications system established upon the 3G mobile telecommunications system, supports only packet-switched transmission, and tends to implement both Medium Access Control (MAC) layer and Radio Link Control (RLC) layer in one single communication site, such as in Node B alone rather than in Node B and RNC (Radio Network Controller) respectively, so that the system structure becomes simpler.

According to the current system structure of the LTE system, the following can be summarized:
1. For User Plane, the layer structure is, from low to high, PHY (Physical layer), MAC, RLC, and PDCP (Packet Data Convergence Protocol).
2. For Control Plane, the layer structure is, from low to high, PHY, MAC, RLC, RRC (Radio Resource Control), and NAS (Non-Access Stratum).
3. For User Plane, ciphering is performed in PDCP.
4. For Control Plane, ciphering and IP (Integrity Protection) for RRC messages are done in RRC and ciphering and IP for NAS messages are done in a layer higher than RRC.
5. NAS messages may or may not be concatenated with RRC messages.
6. No IP from RRC for non-concatenated messages.
7. IP from RRC for concatenated NAS messages is FFS (For Further Study).
8. Protocol error detection and recovery function is performed in RLC.

Therefore, NAS messages can be concatenated with RRC messages (as mentioned in "5"), and ciphering for NAS messages in concatenated messages can be done in PDCP or its upper layer (as mentioned in "4"). In such a situation, a concatenated message must comprise sufficient information to discriminate NAS and RRC messages thereof. However, the prior art does not specify the format of the concatenated message.

This in mind, the present invention aims at providing a method and apparatus for handling packets in a wireless communications system, for discriminating NAS and RRC messages in a concatenated message, so as to maintain system functions.

This is achieved by a method and apparatus for handling packets in a wireless communications system according to claims 1, 6, 11 and 19. The dependent claims pertain to corresponding further developments and improvements.

As will be seen more clearly from the detailed description following below, the claimed method for handling packets in a wireless communications system comprises receiving a NAS message and an RRC message, combining the NAS message, the RRC message, a header, and an indication field indicating position information of the NAS message and the RRC message to get a first concatenated message, performing a ciphering procedure on the first concatenated message except the header to get a second concatenated message, and outputting the second concatenated message.

### Brief Description of the Drawings

Fig. 1 is a function block diagram of a wireless communications device.
Fig. 2 is a diagram of program code of Fig. 1.
Fig. 3 is a flowchart of a process according to an embodiment of the present invention.
Fig. 4 is a schematic diagram of forming a concatenated message according to the process shown in Fig. 3.
Fig. 5 is a flowchart of a process according to another embodiment of the present invention.
Fig. 6 and Fig. 7 are schematic diagrams of forming concatenated messages according to the process shown in Fig. 5.

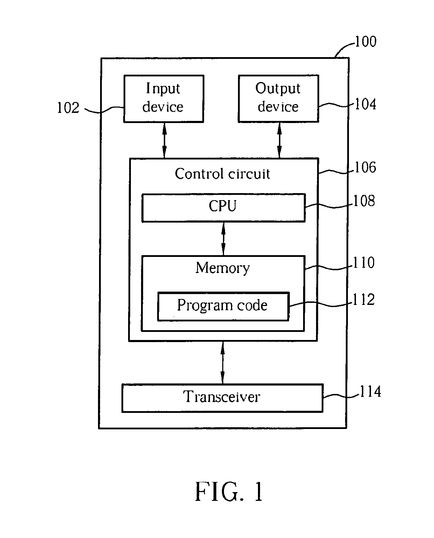

Please refer to Fig. 1, which is a functional block diagram of a communications device 100 in a wireless communications system. The wireless communications system is preferably the LTE system. For the sake of brevity, Fig. 1 only shows an input device 102, an output device 104, a control circuit 106, a central processing unit (CPU) 108, a memory 110, a program code 112, and a transceiver 114 of the communications device 100. In the communications device 100, the control circuit 106 executes the program code 112 in the memory 110 through the CPU 108, thereby controlling an operation of the communications device 100. The communications device 100 can receive signals input by a user through the input device 102, such as a keyboard, and can output images and sounds through the output device 104, such as a monitor or speakers. The transceiver 114 is used to receive and transmit wireless signals, delivering received signals to the control circuit 106, and outputting signals generated by the control circuit 106 wirelessly. From a perspective of a communications protocol framework, the transceiver 114 can be seen as a portion of Layer 1, and the control circuit 106 can be utilized to realize functions of Layer 2 and Layer 3. Preferably, the communications device 100 is utilized in a third generation (3G) mobile communications system.

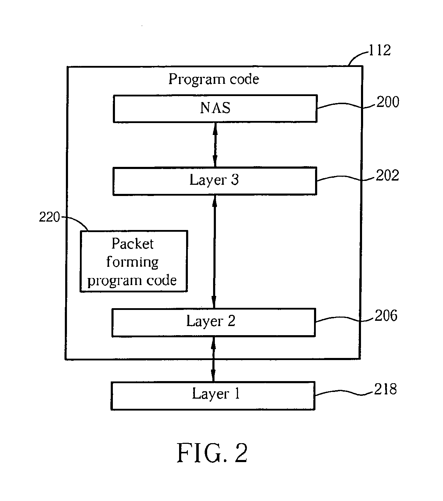

Please continue to refer to Fig. 2. Fig. 2 is a diagram of the program code 112 shown in Fig. 1. The program code 112 includes a Non Access Stratum (NAS) 200, a Layer 3 202, and a Layer 2 206, and is coupled to a Layer 1 218. The NAS 200 can generate NAS messages for realizing NAS applications. The Layer 3 202 is composed of an RRC layer, for performing radio resource control. The Layer 2 206 performs link control, and the Layer 1 218 performs physical connections. Whether a PDCP layer belongs to the Layer 3 202 or the Layer 2 206 is not relevant to this invention.

In the Layer 3 202, NAS messages generated by the NAS 200 can be concatenated with RRC messages generated by the RRC layer, and ciphering for the NAS messages is performed in a layer higher than RRC. In such a situation, the embodiment of the present invention provides a packet forming program code 220 for forming sufficient information in concatenated messages, so as to discriminate NAS and RRC messages in the concatenated messages.

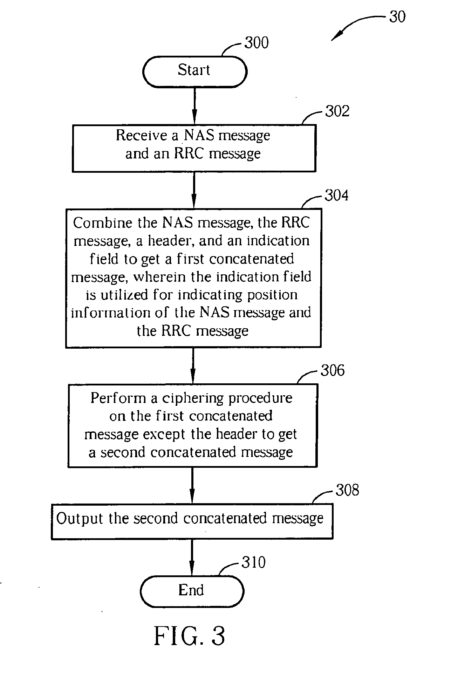

Please refer to Fig. 3, which illustrates a schematic diagram of a process 30 according to an embodiment of the present invention. The process 30 is utilized for accurately forming concatenated messages in a wireless communications system, and can be compiled into the packet forming program code 220. The process 30 comprises the following steps:
- Step 300:: Start.
- Step 302:: Receive a NAS message and an RRC message.
- Step 304:: Combine the NAS message, the RRC message, a header, and an indication field to get a first concatenated message, wherein the indication field is utilized for indicating position information of the NAS message and the RRC message.
- Step 306:: Perform a ciphering procedure on the first concatenated message except the header to get a second concatenated message.
- Step 308:: Output the second concatenated message.
- Step 310:: End.

According to the process 30, when forming a concatenated message composed of a NAS message and an RRC message, the embodiment of the present invention not only adds a header, but also forms an indication field to indicate position information of the NAS message and the RRC message. In addition, the embodiment of the present invention performs ciphering on the concatenated message except the header, that is, on the NAS message, the RRC message, and the indication field. Therefore, via the embodiment of the present invention, the concatenated message comprises information to discriminate the NAS message and the RRC message, so that the receiver can accurately determine positions of the NAS message and the RRC message the concatenated message, and perform corresponding procedures.

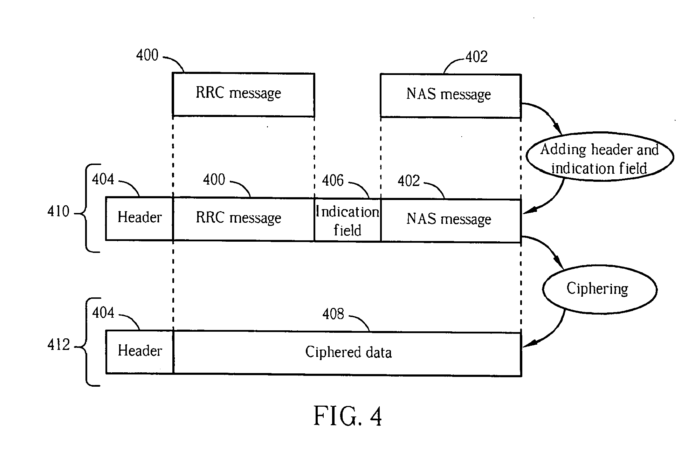

Via the process 30, the embodiment of the present invention uses the indication field to indicate position information of the NAS message and the RRC message, so that the receiver can accurately determine positions of the NAS message and the RRC message in the concatenated message. Note that, in the embodiment of the present invention, the indication field is utilized for indicating position information of the NAS message and the RRC message, and those skilled in the art can make modifications on features of the indication field, such as position, format, size, etc., according to different requirements. For example, please refer to Fig. 4, which illustrates a schematic diagram of forming a concatenated message according to the process 30. In Fig. 4, after receiving an RRC message 400 and a NAS message 402, the embodiment of the present invention concatenates the NAS message 402 to the end of the RRC message 400. Preferably, the embodiment of the present invention adds a header 404 in front of the RRC message 400, and adds an indication field 406 between the RRC message 400 and the NAS message 402, to form a first concatenated message 410. Preferably, the indication field 406 can indicate the start position of the NAS message 402 in the first concatenated message 410, or indicate the end position of the RRC message 400 in the first concatenated message 410. In addition, the indication field 406 can also be added in front of the RRC message 400, which is different from what is shown in Fig. 4. In the next, the embodiment of the present invention performs ciphering on the RRC message 400, the indication field 406, and the NAS message 402 to get ciphered data 408, and forms a second concatenated message 412. After the receiver receives the second concatenated message 412, the receiver can decipher the ciphered data 408 to get the RRC message 400, the indication field 406, and the NAS message 402. Then, according to the indication field 406, the receiver can determine positions of the NAS message 402 and the RRC message 400, so as to recover the NAS message 402 and the RRC message 400.

As shown in Fig. 4, the embodiment of the present invention performs ciphering on the first concatenated message 410 except the header 404, so as to form the second concatenated message 412. Since the upper layer has performed ciphering on the NAS message 402, the NAS message 402 is performed ciphering for at least two times. In such a situation, the present invention further provides another embodiment to overcome the aforementioned problem.

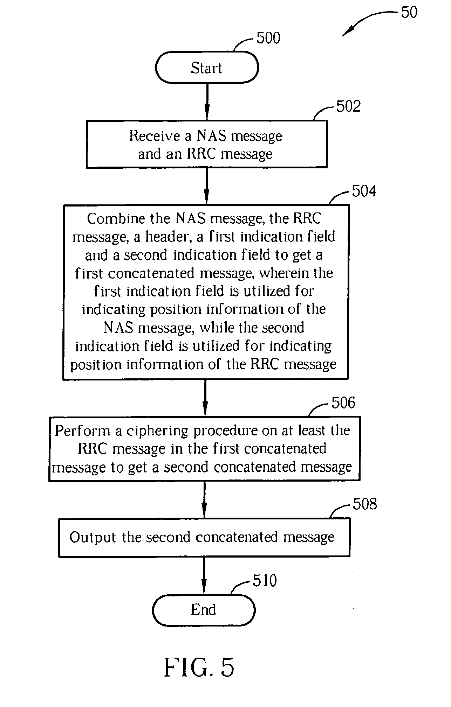

Please refer to Fig. 5, which illustrates a schematic diagram of a process 50 according to another embodiment of the present invention. The process 50 is utilized for accurately forming concatenated messages in a wireless communications system, and can be compiled into the packet forming program code 220. The process 50 comprises the following steps:
- Step 500:: Start.
- Step 502:: Receive a NAS message and an RRC message.
- Step 504:: Combine the NAS message, the RRC message, a header, a first indication field and a second indication field to get a first concatenated message, wherein the first indication field is utilized for indicating position information of the NAS message, while the second indication field is utilized for indicating position information of the RRC message.
- Step 506:: Perform a ciphering procedure on at least the RRC message in the first concatenated message to get a second concatenated message.
- Step 508:: Output the second concatenated message.
- Step 510:: End.

According to the process 50, when forming a concatenated message composed of a NAS message and an RRC message, the embodiment of the present invention not only adds a header, but also forms a first indication field and a second indication field to indicate position information of the NAS message and the RRC message respectively. In addition, the embodiment of the present invention performs ciphering on at least the RRC message in the first concatenated message. That is, the embodiment of the present invention can perform ciphering only on the RRC message. Therefore, via the embodiment of the present invention, the concatenated message comprises information to discriminate the NAS message and the RRC message, and only the RRC message needs to be ciphered, so as to decrease complexity of ciphering and deciphering. As a result, the receiver can accurately determine positions of the NAS message and the RRC message in the concatenated message, and perform corresponding procedures.

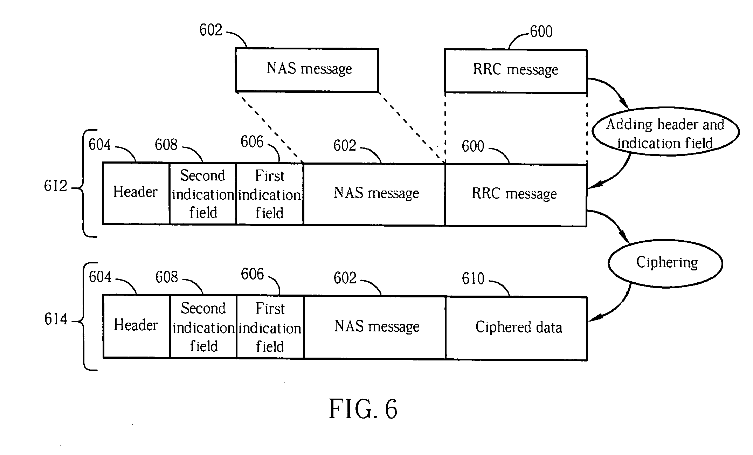

Via the process 50, the embodiment of the present invention uses the first indication field and the second indication field to indicate position information of the NAS message and the RRC message, so that the receiver can accurately determine positions of the NAS message and the RRC message in the concatenated message, and data to be ciphered can be decreased. Note that, in the embodiment of the present invention, the first indication field and the second indication field are utilized for indicating position information of the NAS message and the RRC message, and those skilled in the art can make modifications on features of the first and second indication fields, such as position, format, size, etc., according to different requirements. For example, please refer to Fig. 6, which illustrates a schematic diagram of forming a concatenated message according to the process 50. In Fig. 6, after receiving an RRC message 600 and a NAS message 602, the embodiment of the present invention concatenates the RRC message 600 to the end of the NAS message 602. Preferably, the embodiment of the present invention adds a header 604, a second indication field 608 and a first indication field 606 in front of the NAS message 602 and the RRC message 600, to get a first concatenated message 612. Preferably, the first indication field 606 indicates a start position of the NAS message 602 in the first concatenated message 612, while the second indication field 608 indicates a start position of the RRC message 600 in the first concatenated message 612. Then, the embodiment of the present invention ciphers the RRC message 600 to get ciphered data 610, and forms a second concatenated message 614. After the receiver receives the second concatenated message 614, the receiver can decipher the ciphered data 610 to get the RRC message 600. Then, according to the first indication field 606 and the second indication field 608, the receiver can determine positions of the NAS message 602 and the RRC message 600, so as to recover the NAS message 602 and the RRC message 600.

In Fig. 6, since the upper layer has performed another ciphering procedure on the NAS message 602, the embodiment of the present invention does not need to perform ciphering on the NAS message 602 again. In such a situation, the embodiment of the present invention can decrease the data amount of the ciphering procedure. Certainly, except the RRC message 600, the embodiment of the present invention can further perform ciphering on the NAS message 602 or the first indication field 606 and the second indication field 608.

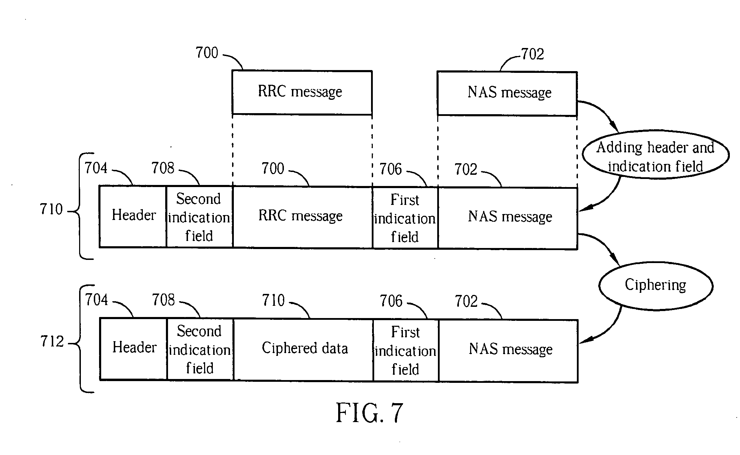

Please refer to Fig. 7, which illustrates a schematic diagram of forming a concatenated message according to the process 50. In Fig. 7, after receiving an RRC message 700 and a NAS message 702, the embodiment of the present invention adds a header 704 and a second indication field 708 in front of the RRC message 700, and adds a first indication field 706 in front of the NAS message 702, to get a first concatenated message 712. Preferably, the first indication field 706 indicates a start position of the NAS message 702 in the first concatenated message 712, while the second indication field 708 indicates an end position of the RRC message 700 in the first concatenated message 712. Then, the embodiment of the present invention ciphers the RRC message 700 to get ciphered data 710, and forms a second concatenated message 714. After the receiver receives the second concatenated message 714, receiver can decipher the ciphered data 710 to get the RRC message 700. Then, according to the first indication field 706 and the second indication field 708, the receiver can determine positions of the NAS message 702 and the RRC message 700, so as to recover the NAS message 702 and the RRC message 700.

Fig. 6 and Fig. 7 are exemplary embodiments of the process 50, and those skilled in the art can make modifications accordingly. Note that, via the process 50, since the upper layer has performed another ciphering procedure on the NAS message, the embodiment of the present invention does not need to perform ciphering on the NAS message. Certainly, the embodiment of the present invention can further perform ciphering on the NAS message or the first indication field and the second indication field.

Therefore, via the process 50, the concatenated message comprises information for discriminating the NAS message and the RRC message, and only the RRC message needs to be ciphered. As a result, the receiver can accurately determine positions of the NAS message and the RRC message in the concatenated message, and can decrease complexity of ciphering and deciphering.

In summary, the embodiment of the present invention provides different formats of the concatenated message, so as to accurately discriminate the NAS message and the RRC message in the concatenated message, and maintain system functions.

## Claims

1. A method for handling packets in a wireless communications system comprising:
receiving a non-access stratum, called NAS hereinafter, message and a radio resource control, called RRC hereinafter, message (302);
**characterized by** combining the NAS message, the RRC message, a header, and an indication field indicating position information of the NAS message and the RRC message to get a first concatenated message (304); performing a ciphering procedure on the first concatenated message except the header to get a second concatenated message (306); and outputting the second concatenated message (308).

2. The method of claim 1, **characterized in that** an upper layer performs another ciphering procedure on the NAS message.

3. The method of claim 1, **characterized in that** combining the NAS message, the RRC message, the header, and the indication field to get the first concatenated message comprises concatenating the NAS message to the end of the RRC message.

4. The method of claim 3, **characterized in that** the indication field indicates a start position of the NAS message in the first concatenated message, so as to indicate position information of the NAS message and the RRC message.

5. The method of claim 3, **characterized in that** the indication field indicates an end position of the RRC message in the first concatenated message, so as to indicate position information of the NAS message and the RRC message.

6. A communications device (100) for accurately handling packets in a wireless communications system comprising:
a control circuit (106) for realizing functions of the communications device (100);
a processor (108) installed in the control circuit (106), for executing a program code (112) to command the control circuit (106); and
a memory (110) installed in the control circuit (106) and coupled to the processor (108) for storing the program code (112) ;
wherein the program code (112) comprises:
receiving a non-access stratum, called NAS hereinafter,
message and a radio resource control, called RRC
hereinafter, message (302);
**characterized by** combining the NAS message, the RRC message, a header, and an indication field indicating position information of the NAS message and the RRC message to get a first concatenated message (304);
performing a ciphering procedure on the first concatenated message except the header to get a second concatenated message (306); and
outputting the second concatenated message (308).

7. The communications device of claim 6, **characterized in that** an upper layer performs another ciphering procedure on the NAS message.

8. The communications device of claim 6, **characterized in that** combining the NAS message, the RRC message, the header, and the indication field to get the first concatenated message in the program code comprises concatenating the NAS message to the end of the RRC message.

9. The communications device of claim 8, **characterized in that** the indication field indicates a start position of the NAS message in the first concatenated message, so as to indicate position information of the NAS message and the RRC message.

10. The communications device of claim 8, **characterized in that** the indication field indicates an end position of the RRC message in the first concatenated message, so as to indicate position information of the NAS message and the RRC message.

11. A method for handling packets in a wireless communications system comprising:
receiving a non-access stratum, called NAS hereinafter, message and a radio resource control, called RRC hereinafter, message (502);
**characterized by** combining the NAS message, the RRC message, a header, a first indication field and a second indication field to get a first concatenated message, the first indication field indicating position information of the NAS message, the second indication field indicating position information of the RRC message (504);
performing a ciphering procedure on at least the RRC message in the first concatenated message to get a second concatenated message (506); and
outputting the second concatenated message (508).

12. The method of claim 11, **characterized in that** an upper layer performs another ciphering procedure on the NAS message.

13. The method of claim 11, **characterized in that** combining the NAS message, the RRC message, the header, the first indication field and the second indication field to get the first concatenated message comprises concatenating the RRC message to the end of the NAS message.

14. The method of claim 13, **characterized in that** the first indication field indicates a start position of the NAS message in the first concatenated message so as to indicate position information of the NAS message, and the second indication field indicates a start position of the RRC message in the first concatenated message so as to indicate position information of the RRC message.

15. The method of claim 13, **characterized in that** performing the ciphering procedure on at least the RRC message in the first concatenated message comprises performing the ciphering procedure on the RRC message and the NAS message in the first concatenated message.

16. The method of claim 13, **characterized in that** performing a ciphering procedure on at least the RRC message in the first concatenated message comprises performing the ciphering procedure on the RRC message, the NAS message, the first indication field, and the second indication field in the first concatenated message.

17. The method of claim 11, **characterized in that** combining the NAS message, the RRC message, the header, the first indication field and the second indication field to get the first concatenated message is concatenating the second indication field to the end of the header, concatenating the RRC message to the end of the second indication field, concatenating the first indication field to the end of the RRC message, and concatenating the NAS message to the end of the first indication field get the first concatenated message.

18. The method of claim 17, **characterized in that** the first indication field indicates a start position of the NAS message in the first concatenated message so as to indicate position information of the NAS message, and the second indication field indicates an end position of the RRC message in the first concatenated message so as to indicate position information of the RRC message.

19. A communications device (100) for accurately handling packets in a wireless communications system comprising:
a control circuit (106) for realizing functions of the communications device (100);
a processor (108) installed in the control circuit (106), for executing a program code (112) to command the control circuit (106); and
a memory (110) installed in the control circuit (106) and coupled to the processor (108) for storing the program code (112);
wherein the program code (112) comprises:
receiving a non-access stratum, called NAS hereinafter, message and a radio resource control, called RRC hereinafter, message (502);
**characterized by** combining the NAS message, the RRC message, a header, a first indication field and a second indication field to get a first concatenated message, the first indication field indicating position information of the NAS message, the second indication field indicating position information of the RRC message (504);
performing a ciphering procedure on at least the RRC message in the first concatenated message to get a second concatenated message (506); and
outputting the second concatenated message (508).

20. The communications device of claim 19, **characterized in that** an upper layer performs another ciphering procedure on the NAS message.

21. The communications device of claim 19, **characterized in that** combining the NAS message, the RRC message, the header, the first indication field and the second indication field to get the first concatenated message in the program code comprises concatenating the RRC message to the end of the NAS message.

22. The communications device of claim 21, **characterized in that** the first indication field indicates a start position of the NAS message in the first concatenated message so as to indicate position information of the NAS message, and the second indication field indicates a start position of the RRC message in the first concatenated message so as to indicate position information of the RRC message.

23. The communications device of claim 21, **characterized in that** performing the ciphering procedure on at least the RRC message in the first concatenated message in the program code comprises performing the ciphering procedure on the RRC message and the NAS message in the first concatenated message.

24. The communications device of claim 21, **characterized in that** performing a ciphering procedure on at least the RRC message in the first concatenated message in the program code comprises performing the ciphering procedure on the RRC message, the NAS message, the first indication field, and the second indication field in the first concatenated message.

25. The communications device of claim 19, **characterized in that** combining the NAS message, the RRC message, the header, the first indication field and the second indication field to get the first concatenated message in the program code is concatenating the second indication field to the end of the header, concatenating the RRC message to the end of the second indication field, concatenating the first indication field to the end of the RRC message, and concatenating the NAS message to the end of the first indication field get the first concatenated message.

26. The communications device of claim 25, **characterized in that** the first indication field indicates a start position of the NAS message in the first concatenated message so as to indicate position information of the NAS message, and the second indication field indicates an end position of the RRC message in the first concatenated message so as to indicate position information of the RRC message.
